# DEMANDE DE BREVET EUROPEEN

(11) **EP 2 158 807 A1**
(43) Date de publication de la demande: **03.03.2010**
(21) Numéro de dépôt: 09169092.5
(22) Date de dépôt: 31.08.2009
(51) Int. Cl.: A01G 9/02, B28B 7/16

(54) **Dispositif et procede de construction d'une paroi comprenant des vegetaux, notamment d'une paroi destinee a la culture hydroponique**

(30) Priorité: 01.09.2008 FR 0855840
(71) Demandeur: Vernay, Bernard, 69002 Lyon (FR); Chantrel, Guillemette, 69002 Lyon (FR)
(72) Inventeur: Vernay, Bernard, 69002, LYON (FR)
(74) Mandataire: Jeannet, Olivier

(57) **Abrégé**

Selon l'invention, ce dispositif comprend :
- des moyens d'aménagement d'une paroi (103) par moulage, notamment sous forme d'un coffrage ;
- au moins un ensemble de moulage (1) comprenant :
un élément de base (2) incluant une paroi périphérique (6) et une paroi transversale (7) située à l'intérieur de la paroi périphérique (6), cette paroi transversale (7) délimitant une première cavité (10) et une deuxième cavité (11) séparée l'une de l'autre ; la première cavité (10) comprend au moins une fenêtre (12) aménagée au travers de ladite paroi périphérique (6), et l'élément de base (2) comprend au moins un volet (3) mobile entre une position de libération de cette fenêtre (12) et une position d'occultation complète de cette fenêtre (12) ; des moyens d'actionnement à distance (4) du volet (3) entre lesdites positions de libération et d'occultation ;
au moins un premier élément de réservation (5) disposé dans ladite première cavité (10), comprenant une extension (21) qui s'étend entre ladite paroi transversale (7) et le bord libre délimitant ladite première cavité (6) ;

la deuxième cavité étant apte à former un espace racinaire de réception des racines d'une plante, et cet espace racinaire pouvant recevoir ledit couvercle sur sa partie correspondante, la ou les tiges et/ou branches de la plante pouvant traverser ce couvercle grâce audit premier conduit que comprend ce couvercle.

## Description

La présente invention concerne un dispositif et un procédé de construction d'une paroi comprenant des végétaux, notamment d'une paroi destinée à la culture hydroponique.

Il est connu de réaliser des murs végétaux sur des supports tels que des sols, des cloisons, des murs porteurs ou autres murs visuellement inesthétiques. Ces murs végétaux sont généralement réalisés sur des sols ou des murs existants mais ne font pas partie intégrante de l'architecture même de ceux-ci.

Ces murs végétaux sont habituellement constitués soit de feutre et de structures métalliques, soit d'éléments empilables réalisés en béton ou matériaux similaires. Par conséquent, le transport et l'installation de ces structures ou éléments sont assez complexes et coûteux.

Il est également connu d'utiliser des systèmes permettant de réaliser des cultures hydroponiques, à savoir des systèmes comprenant au moins un espace racinaire, c'est-à-dire un espace de réception des racines d'une plante, un réseau d'alimentation hydroponique, c'est-à-dire d'alimentation de l'espace racinaire en eau, nutriments, oxygène, etc. et une ouverture à l'air libre pour les apports en dioxyde de carbone, lumière, etc. De tels systèmes de culture permettent la production de plantes sur différents types de surfaces ou de plans.

Ces systèmes de culture hydroponique ont pour inconvénient de ne pas être parfaitement intégrés aux supports sur lesquels ils sont mis en place. En effet, le ou les espaces racinaires ou le réseau de canalisations est généralement visible et accessible de l'extérieur, ce qui ne permet pas l'utilisation de tels systèmes pour la réalisation d'ouvrages esthétiques ou d'ouvrages en milieu urbain.

Il est aussi connu d'encastrer le ou les espaces racinaires ou le réseau de canalisations dans une paroi dans laquelle le système hydroponique est destiné à être mis en place, les plantes traversant un trou de cette paroi, qui communique avec le ou les espaces racinaires. Cette méthode a pour inconvénient majeur de ne pas permettre d'accéder à la plante ou aux racines de celle-ci pour effectuer un nettoyage de l'espace racinaire ou tout simplement pour le remplacement de la plante.

De tels systèmes sont notamment divulgués par les documents US 1 817 391, US 1 375 950 et US 3 288 425.

Il n'existe pas, à ce jour, de dispositif et de procédé de construction de murs végétaux, notamment de murs destinés à la culture hydroponique, permettant simultanément de réaliser des parois en matériaux de construction classiques en créant des systèmes de cavités et de réseaux de canalisation dans ces parois lors de la construction de celles-ci, d'alimenter individuellement chaque plante en fonction de ses besoins, et d'accéder individuellement à chacune des plantes pour un éventuel remplacement.

La présente invention vise à remédier à ces lacunes.

A cet effet, le dispositif selon l'invention comprend :
- des moyens d'aménagement de la paroi par moulage, notamment sous forme d'un coffrage ;
- au moins un ensemble de moulage comprenant :
   - un élément de base incluant une paroi périphérique et une paroi transversale située à l'intérieur de la paroi périphérique, cette paroi transversale délimitant une première cavité et une deuxième cavité séparée l'une de l'autre ; la première cavité comprend au moins une fenêtre aménagée au travers de ladite paroi périphérique, et l'élément de base comprend au moins un volet mobile entre une position de libération de cette fenêtre et une position d'occultation complète de cette fenêtre ;
   - des moyens d'actionnement à distance du volet entre lesdites positions de libération et d'occultation ;
   - au moins un premier élément de réservation disposé dans ladite première cavité, comprenant une extension qui s'étend entre ladite paroi transversale et le bord libre délimitant ladite première cavité.

Ainsi, pour aménager ladite paroi, on place dans lesdits moyens d'aménagement un ou plusieurs ensemble de moulage puis on remplit les moyens d'aménagement par du matériau de remplissage durcissable destiné à constituer la paroi ; ce matériau vient entourer chaque ensemble de moulage et, le volet étant en position de libération, vient envahir ladite première cavité et entourer le ou lesdits éléments de réservation. Lorsque le matériau de remplissage atteint le niveau correspondant à l'épaisseur souhaitée de la paroi à réalisée, le volet est amené en position d'occultation, isolant ainsi la quantité de matériau de remplissage se trouvant dans ladite première cavité. Après la prise du matériau de remplissage, ladite quantité de matériau de remplissage forme un bloc pouvant être retiré hors de la paroi périphérique de l'ensemble de moulage, et forme un couvercle pourvu d'un premier conduit le traversant de part en part, ce premier conduit ayant été aménagé par le ou lesdits éléments de réservation, en particulier par ladite extension.

La paroi transversale est ensuite éliminée de manière à ouvrir la deuxième cavité formée dans le matériau de remplissage. Cette deuxième cavité est alors apte à former un espace racinaire de réception des racines d'une plante, et cet espace racinaire peut recevoir ledit couvercle sur sa partie correspondante, la ou les tiges et/ou branches de la plante pouvant traverser ce couvercle grâce audit premier conduit que comprend ce couvercle.

L'invention fournit ainsi un dispositif permettant d'aménager simultanément une cavité formant un espace racinaire et un couvercle propre à fermer cet espace racinaire.

Ce dispositif permet par conséquent de constituer des parois incluant des végétaux et permettant la création de réseaux d'alimentation et de vidange de cavités racinaires de manière simple, rapide et peu onéreuse.

Le couvercle reste amovible, ce qui permet un remplacement facile d'une plante morte ou un changement d'une plante contenue dans un espace racinaire.

Le procédé selon invention comprend les étapes consistant à :
- utiliser le dispositif tel que précité ;
- placer au moins un ensemble de moulage dans lesdits moyens d'aménagement ;
- alors que chaque volet est en position de libération de la fenêtre correspondante, remplir les moyens d'aménagement de matériau de remplissage jusqu'au niveau correspondant à l'épaisseur souhaitée de la paroi à réaliser ;
- déplacer chaque volet de ladite position de libération vers ladite position d'occultation, alors que ledit matériau de remplissage est encore frais ;
- laisser durcir le matériau de remplissage ;
- retirer la quantité de matériau de remplissage contenue dans ladite première cavité, et
- éliminer ladite paroi transversale de manière à permettre l'accès à la deuxième cavité formée dans le matériau de remplissage.

L'ensemble de moulage pourrait être perdu, c'est-à-dire rester à demeure dans la paroi formée dans le matériau de remplissage. Dans ce cas, l'élimination de ladite paroi transversale peut consister par exemple en une découpe, un dévissage, ou un déclipsage de cette paroi. De manière préférée, toutefois, l'ensemble de moulage est récupérable, l'élimination de ladite paroi transversale résultant alors simplement du retrait de cet ensemble de moulage par rapport au matériau de remplissage.

Lorsque l'ensemble de moulage est récupérable, la paroi périphérique de cet ensemble de moulage présente avantageusement une forme tronconique.

Cette forme tronconique permet de faciliter le retrait de l'ensemble de moulage par rapport au matériau de remplissage. De plus, le couvercle obtenu présente lui-même une paroi périphérique tronconique pouvant prendre place sur le siège correspondant aménagé dans le matériau de remplissage par ladite paroi périphérique, et être ainsi immobilisé dans le sens axial par rapport à la paroi aménagée dans le matériau de remplissage.

De préférence, le dispositif comprend au moins un deuxième élément de réservation permettant d'aménager une première conduite entre ledit élément de réservation formant ladite extension et ladite paroi périphérique.

Ce deuxième élément de réservation permet ainsi d'aménager une première conduite au travers du couvercle, entre la face périphérique de ce couvercle et ledit conduit de passage de la plante, aménagé au travers de ce couvercle. Cette première conduite peut être utilisée pour réaliser un arrosage de la plante, ou pour l'alimentation hydroponique de cette plante.

Le dispositif peut également comprendre au moins une deuxième conduite débouchant dans ladite deuxième cavité et s'étendant jusqu'à un point situé à l'extérieur de la paroi à constituer.

Une fois la paroi constituée, cette deuxième conduite permet un apport d'eau et/ou de nutriments au niveau dudit espace racinaire, ou un drainage de cette eau depuis cet espace.

De préférence, le dispositif comprend des moyens d'immobilisation de chaque ensemble de moulage par rapport aux moyens d'aménagement.

Ces moyens d'immobilisation permettent de maintenir le ou les ensembles de moulage en position lors de la coulée du matériau de remplissage.

Selon une forme de réalisation préférée de l'invention, dans ce cas, lesdits moyens d'immobilisation comprennent ledit deuxième élément de réservation et une pompe à vide reliée à ce deuxième élément de réservation.

La mise de ladite première cavité en dépression permet de faire plaquer le bord libre de ladite paroi périphérique contre la surface contre laquelle l'ensemble de moulage est posé, et permet ainsi d'assurer un maintien de cet ensemble de moulage par rapport auxdits moyens d'aménagement.

Lesdits moyens d'actionnement du ou des volets pourraient être constitués simplement par une ou plusieurs tiges s'étendant au delà du bord libre délimitant ladite première cavité, permettant d'appuyer sur le ou lesdits volets, ces tiges pouvant être amovibles, c'est-à-dire être retirées une fois le ou les volets amenés en position d'occultation.

Selon une forme de réalisation de l'invention, lorsque l'ensemble de moulage est récupérable, lesdits moyens d'actionnement comprennent au moins un ensemble à cylindre et piston, au moins un électroaimant, ou au moins un dispositif combinant un ou plusieurs ensembles à cylindre et piston et électroaimants, afin de permettre le déplacement du ou des volets.

Selon une forme de réalisation préférée de l'invention, lesdits moyens d'actionnement comprennent au moins un ensemble à cylindre et piston, relié par l'intermédiaire de ladite deuxième conduite à la même pompe à vide que celle que comprennent les moyens d'immobilisation.

Avantageusement, une pluralité d'ensembles de moulage sont assemblés les uns aux autres sous forme de lots de manière à constituer des panneaux de moulage comprenant un nombre d'ensembles de moulage prédéterminé. Les panneaux ainsi obtenus ont l'avantage de faciliter le transport des ensembles de moulage et de diminuer le temps nécessaire à la préparation des moyens d'aménagement de la paroi pour le coulage du matériau de remplissage.

L'invention sera bien comprise, et d'autres caractéristiques et avantages de celle-ci apparaîtront, en référence au dessin schématique annexé, représentant, à titre d'exemple non limitatif, une forme de réalisation préférée du dispositif qu'elle concerne.

La figure 1 est une vue en perspective d'un ensemble de moulage que comprend ce dispositif ;
la figure 2 est une coupe en perspective de cet ensemble de moulage selon la ligne A-A de la figure 1 ;
la figure 3 est une vue en coupe de l'ensemble de moulage similaire à la figure 2, des moyens d'actionnement de volets que comprend l'ensemble de moulage étant représentés ;
les figures 4 à 8 sont des vues en coupe de l'ensemble de moulage similaires à la figure 3, illustrant différentes étapes successives d'un procédé de construction d'une paroi comprenant des végétaux, mis en oeuvre au moyen du dispositif selon l'invention, selon une première possibilité de mise en oeuvre ;
la figure 9 est une vue similaire à la figure 8, illustrant une cavité aménagée dans la paroi obtenue par le dispositif selon l'invention ;
la figure 10 est une vue en perspective d'un sac de réception d'une plante destinée à être cultivée de manière hydroponique ;
la figure 11 est une vue similaire à la figure 9, illustrant l'utilisation d'un sac de réception d'une plante destinée à être cultivée de manière hydroponique selon l'invention ; et
la figure 12 est une vue en coupe de l'ensemble de moulage similaire à la figure 4, illustrant une étape du procédé de construction selon une deuxième possibilité de mise en oeuvre, avant coulée de béton.

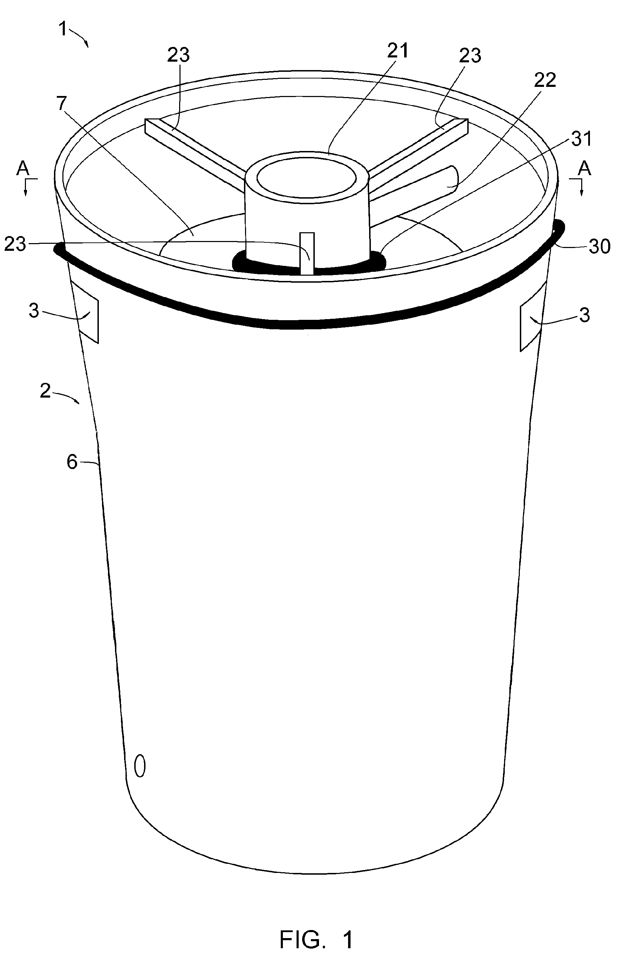

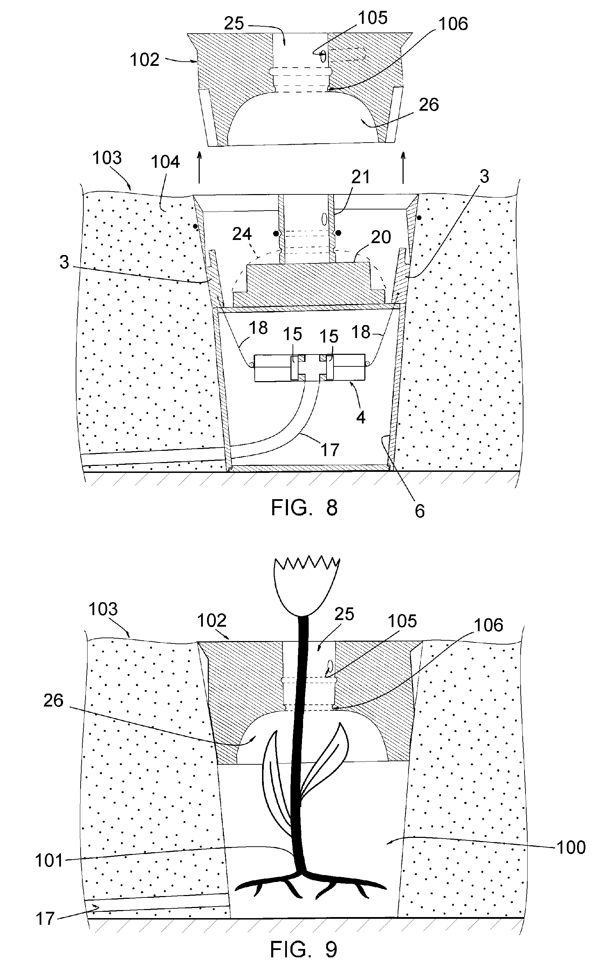

Les figures 1 à 3 représentent un ensemble de moulage 1 utilisé pour aménager, comme le montre la figure 9, une cavité 100 de réception des racines d'une plante 101 et un couvercle 102 de fermeture de cette cavité 100, permettant le passage de la plante 101.

Cet ensemble de moulage 1 est destiné à être mis en place dans un coffrage (non représenté), de moulage de la paroi 103 destinée à comporter une ou plusieurs plantes 101 , cette paroi étant formée par un matériau de remplissage durcissable 104, coulé dans ledit coffrage. Ce matériau de remplissage peut être du béton.

En référence aux figures 1 à 3, l'ensemble de moulage 1 comprend un élément de base 2, deux volets 3, un ensemble 4 d'actionnement à distance de ces volets 3 et un élément de réservation 5.

L'élément de base 2 est de forme extérieure tronconique et est réalisé en matériau faiblement adhérent au béton, notamment en PVC. Il est de préférence enduit de paraffine avant d'être mis en place dans le coffrage, de manière à faciliter son retrait après séchage du béton.

L'élément de base 2 inclut une paroi périphérique 6 et une paroi transversale 7 située à l'intérieur de la paroi périphérique 6.

La paroi périphérique 6 a une hauteur correspondant à l'épaisseur de la paroi 103 à constituer et forme des bords périphériques supérieur et inférieur délimitant des ouvertures circulaires.

La paroi transversale 7 porte contre la paroi périphérique 6 par l'ensemble de son bord périphérique de sorte qu'elle sépare, de manière étanche au béton, le volume délimité par cette paroi 6 en une première cavité 10 et une deuxième cavité 11.

La paroi périphérique 6 comprend deux fenêtres 12 aménagées au travers d'elle, en des emplacements diamétralement opposés, les bords inférieurs de ces fenêtres 12 étant à fleur de la face supérieure de la paroi 7.

Les deux volets 3 sont situés en regard de ces fenêtres 12 et, comme le montrent les figures, sont mobiles par rapport à la paroi 6 entre une position de libération des fenêtres 12 et une position d'occultation complète de ces fenêtres 12.

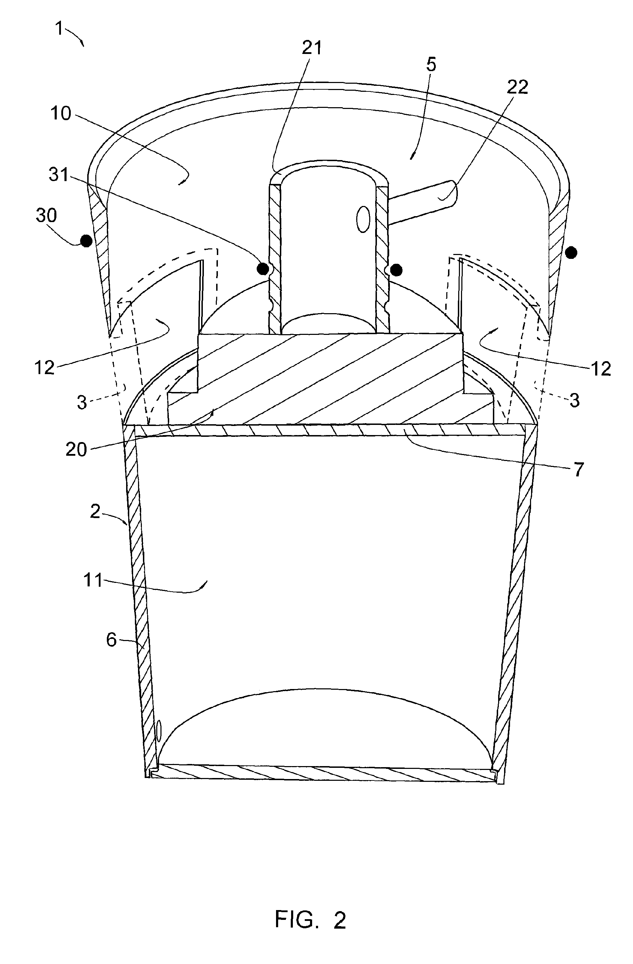

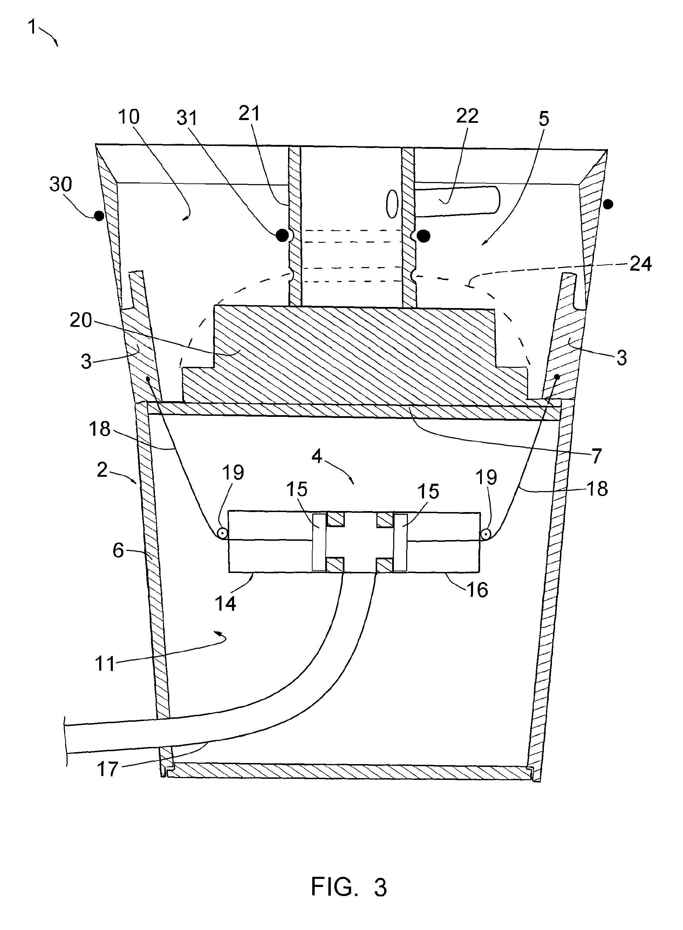

Il apparaît sur les figures 2 et 3 que la paroi 6 présente, au-dessus de ces fenêtres 12, un amincissement progressif de son épaisseur en direction de ces fenêtres. Comme le montre la figure 3, cet amincissement permet que les faces externes des volets 3 viennent en affleurement de la face externe de la paroi périphérique 6 dans ladite position d'occultation complète des fenêtres 12 par les volets 3.

Les moyens 4 d'actionnement de ces volets 3 à distance comprennent un ensemble 14 fixé à la paroi périphérique 6, comprenant deux pistons 15 contenus dans un cylindre 16 et une pompe à vide (non représentée), le cylindre 16 étant relié à cette pompe à vide par une deuxième conduite 17. Chaque piston 15 est relié à une extrémité d'un câble 18 dont l'autre extrémité est reliée à l'un des volets 3, ce câble 18 passant sur une poulie de renvoi 19.

L'élément de réservation 5 est disposé dans la première cavité 10. Il comprend une embase 20 à gradins, une extension centrale 21, un tube 22, des barrettes de positionnement 23 (cf. figure 1) et une membrane élastique 24.

L'embase 20, l'extension 21 et la membrane 24 permettent, comme le montrent les figures 8 et 9, de mouler un conduit 25 et une cavité 26 permettant à une ou plusieurs tiges de la plante 101 de traverser le couvercle 102.

Le tube 22 est coincé entre la paroi périphérique 6 et l'extension 21, sans inter-engagement de ses extrémités avec cette paroi 6 et cette extension 21. Il permet d'aménager une conduite radiale 105 dans le couvercle 102, permettant, dans la première possibilité de mise en oeuvre du procédé montrée sur les figures 1 à 11, un apport à la plante 101 d'eau d'arrosage et autres nutriments, sans faire obstacle au démoulage du couvercle 102.

Les barrettes de positionnement 23 permettent le maintien de l'ensemble embase 20-extension 21 au moment du coulage du béton. Elles sont également coincées entre la paroi 6 et l'extension 21, de sorte qu'elles ne font pas non plus obstacle au démoulage du couvercle 102.

La membrane 24 est en matériau élastomère et permet de faciliter le démoulage du couvercle 102 ainsi que de compenser la différence de pression résultant de la compression au moment de la fermeture des fenêtres.

Un premier joint torique 30 est agencé sur toute la circonférence de la partie externe de la paroi périphérique 6, sur une partie située entre les fenêtres 12 et le bord périphérique de la paroi périphérique 6. La présence de ce joint permet d'assurer l'étanchéité du contact entre l'élément de base 2 et le la paroi 103 à réaliser.

Un deuxième joint torique 31 est agencé sur toute la circonférence de l'extension 21, sur une partie située sensiblement au centre de ce tube cylindrique 22.

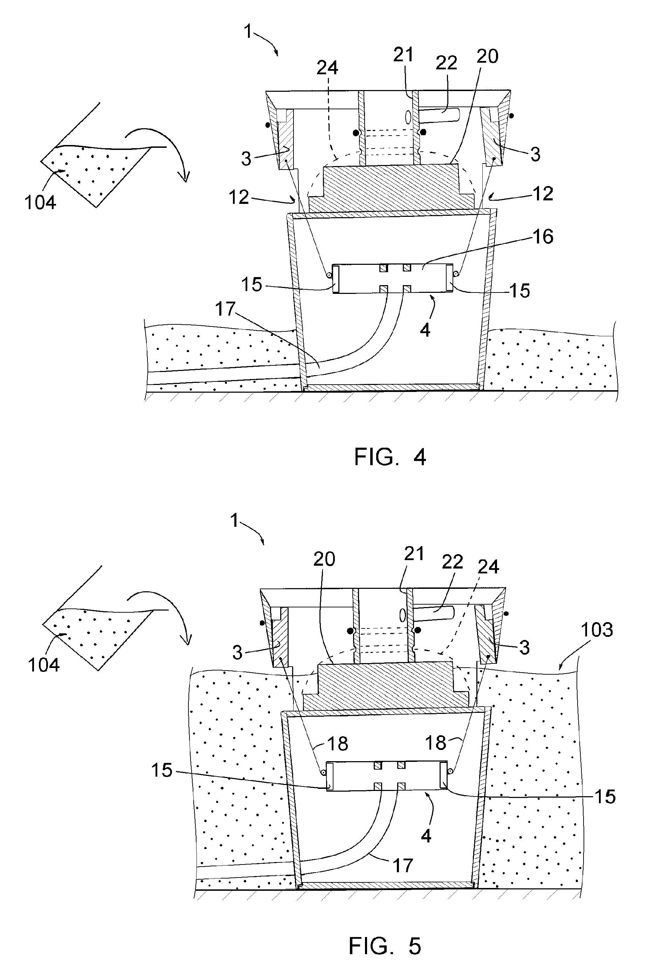

En pratique, ainsi que le montrent les figures 4 à 8, l'ensemble de moulage est placé dans le coffrage, les volets 3 étant en position de libération des fenêtres 12, puis du béton 104 est coulé (cf. figure 4). Le fond de l'ensemble de moulage 1 peut comprendre des moyens pour son immobilisation à la paroi du coffrage, notamment des aimants si cette paroi est métallique.

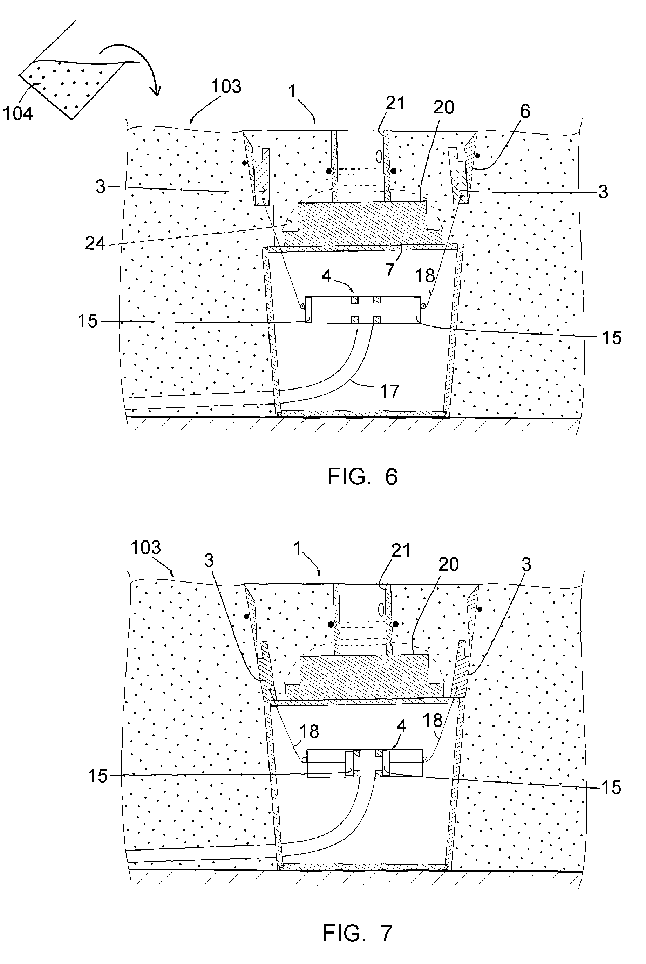

Au fur et à mesure de sa coulée, le béton pénètre dans la première cavité 10 délimitée par l'élément de base 2, par les fenêtres 12 (cf. figure 5), et est coulé de manière à venir en affleurement avec le bord supérieur de la paroi périphérique 6. La pompe à vide est alors actionnée de manière à déplacer les pistons 15, amenant de ce fait les volets 3 en position d'occultation des fenêtres 12 (cf. figure 7). La quantité de béton située dans cette première cavité 10 est ainsi isolée du reste du béton coulé dans le coffrage.

Après prise du béton, ladite quantité de béton est démoulée, formant le couvercle 102 (cf. figure 8), puis l'ensemble de moulage 1 est retiré de la paroi 103 constituée par ce béton. Une plante 101 peut alors être mise en place dans la partie de la cavité 100 aménagée au moyen de cet ensemble de moulage 1 puis le couvercle 102 est remis en place. Ce couvercle 102 est calé axialement par rapport à la paroi 103 grâce aux formes tronconiques respectives de ce couvercle 102 et de cette paroi 103.

La plante 101 peut alors pousser au travers du couvercle 102 (cf. figure 9) et peut être alimentée en eau et nutriments par un conduit d'alimentation (non représenté) disposé dans la conduite radiale 105. L'eau peut être drainée par le conduit 17.

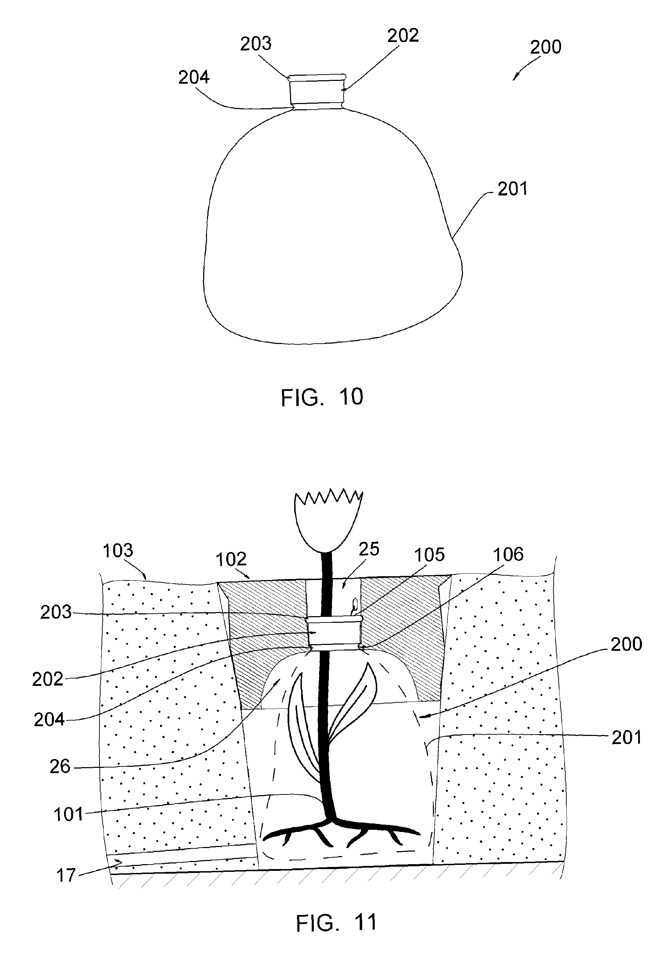

Les figures 10 et 11 représentent un sac 200 de réception d'une plante destinée à la culture hydroponique. Ce sac 200 comprend une enveloppe 201 faite d'un matériau souple et poreux, par exemple en tissu, et une extrémité 202 de clôture de l'enveloppe 201. L'enveloppe 201 reçoit en elle la plante 101 destinée à être cultivée de manière hydroponique.

L'extrémité 202 est conformée de manière à coopérer avec le conduit 25 aménagé dans le couvercle 102 pour le passage d'une ou plusieurs tiges de la plante 101. Le rebord 203 et la partie rétrécie 204 de cette extrémité 202 sont propres à coopérer avec la forme du conduit 25 obtenue au niveau du joint torique 31 et au niveau de l'agencement de la membrane 24, respectivement.

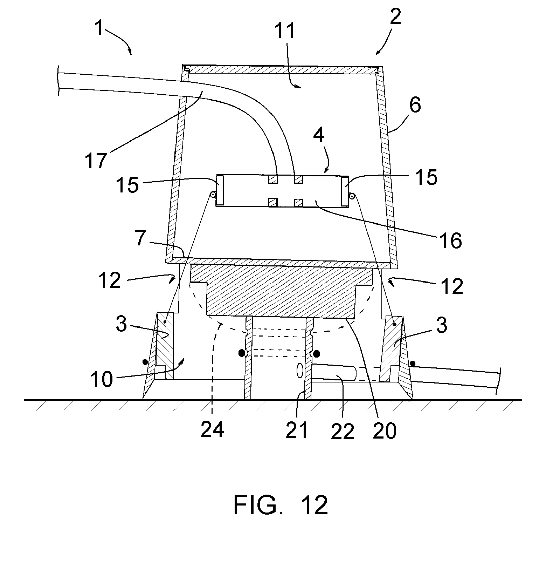

La figure 12 montre une deuxième possibilité de mise en oeuvre du procédé précité, dans laquelle l'ensemble 1 est utilisé dans une position inversée par rapport à la position d'utilisation montrée sur les figures 4 à 8. Le tube 22 est dans ce cas relié à une pompe à vide et permet de mettre l'extension tubulaire 21 en dépression, l'ensemble formant des moyens d'immobilisation de l'ensemble de moulage 1 par rapport au coffrage. Cette pompe à vide peut avantageusement être la même que celle à laquelle est reliée la conduite 17, des vannes étant alors prévues pour permettre de mettre sélectivement en communication le tube 22 et cette conduite 17 avec cette pompe à vide afin de réaliser l'immobilisation de l'ensemble 1 dans un premier temps puis la fermeture des volets 3 dans un deuxième temps..

Comme cela apparaît de ce qui précède, l'invention fournit un dispositif de construction d'une paroi comprenant des végétaux qui remédie aux inconvénients des parois homologues de la technique antérieure, en permettant simultanément de réaliser des parois en matériaux de construction classiques, en créant des systèmes de cavités et de réseaux de canalisation dans ces parois lors de la construction de celles-ci, et en permettant d'accéder aux plantes.

L'invention a été décrite ci-dessus en référence à des formes de réalisation fournies à titre d'exemple. Il va de soi qu'elle n'est pas limitée à ces formes de réalisation mais qu'elle s'étend à toutes les autres formes de réalisations couvertes par les revendications ci-annexées.

## Revendications

1. - Dispositif de construction d'une paroi (103) comprenant des végétaux (101), notamment d'une paroi destinée à la culture hydroponique, **caractérisé en ce qu'**il comprend :
- des moyens d'aménagement de la paroi (103) par moulage, notamment sous forme d'un coffrage ;
- au moins un ensemble de moulage (1) comprenant :
. un élément de base (2) incluant une paroi périphérique (6) et une paroi transversale (7) située à l'intérieur de la paroi périphérique (6), cette paroi transversale (7) délimitant une première cavité (10) et une deuxième cavité (11) séparée l'une de l'autre ; la première cavité (10) comprend au moins une fenêtre (12) aménagée au travers de ladite paroi périphérique (6), et l'élément de base (2) comprend au moins un volet (3) mobile entre une position de libération de cette fenêtre (12) et une position d'occultation complète de cette fenêtre (12) ;
. des moyens (4) d'actionnement à distance du volet (3) entre lesdites positions de libération et d'occultation ;
. au moins un premier élément de réservation (5) disposé dans ladite première cavité (10), comprenant une extension (21) qui s'étend entre ladite paroi transversale (7) et le bord libre délimitant ladite première cavité (6).

2. - Dispositif selon la revendication 1, **caractérisé en ce que** la paroi périphérique (6) dudit ensemble de moulage (1) présente une forme tronconique.

3. - Dispositif selon la revendication 1 ou la revendication 2, **caractérisé en ce qu'**il comprend au moins un deuxième élément de réservation (22) permettant d'aménager une première conduite (105) entre ledit élément de réservation formant ladite extension (21) et ladite paroi périphérique (6).

4. - Dispositif selon l'une des revendications 1 à 3, **caractérisé en ce qu'**il comprend au moins une deuxième conduite (17) débouchant dans ladite deuxième cavité (11) et s'étendant jusqu'à un point situé à l'extérieur de la paroi (103) à constituer.

5. - Dispositif selon l'une des revendications 1 à 4, **caractérisé en ce que** le dispositif comprend des moyens d'immobilisation de chaque ensemble de moulage (1) par rapport auxdits moyens d'aménagement.

6. - Dispositif selon la revendication 5, **caractérisé en ce que** lesdits moyens d'immobilisation comprennent ledit deuxième élément de réservation (22) et une pompe à vide reliée à ce deuxième élément de réservation (22).

7. - Dispositif selon l'une des revendications 1 à 6, **caractérisé en ce que** lesdits moyens d'actionnement (4) sont constitués par au moins un ensemble à cylindre et piston, au moins un électroaimant, ou au moins un dispositif combinant un ou plusieurs ensembles à cylindre et piston et électroaimants.

8. - Dispositif selon la revendication 6 ou la revendication 7, **caractérisé en ce que** lesdits moyens d'actionnement comprennent au moins un ensemble (4) à cylindre (16) et piston (15) relié, par l'intermédiaire de ladite deuxième conduite (17), à la même pompe à vide que celle que comprennent les moyens d'immobilisation.

9. - Procédé de construction d'une paroi comprenant des végétaux, notamment d'une paroi (103) destinée à la culture hydroponique, selon l'une des revendications 1 à 8, **caractérisé en ce qu'**il comprend les étapes consistant à :
- utiliser le dispositif tel que précité ;
- placer au moins un ensemble de moulage (1) dans lesdits moyens d'aménagement ;
- alors que chaque volet (3) est en position de libération de la fenêtre (12) correspondante, remplir les moyens d'aménagement de matériau de remplissage (104) jusqu'au niveau correspondant à l'épaisseur souhaitée de la paroi (103) à réaliser;
- déplacer chaque volet (3) de ladite position de libération vers ladite position d'occultation, alors que ledit matériau de remplissage (104) est encore frais ;
- laisser durcir le matériau de remplissage (104) ;
- retirer la quantité de matériau de remplissage (104) contenue dans ladite première cavité (10), et
- éliminer ladite paroi transversale (7) de manière à permettre l'accès à la deuxième cavité (11) formée dans le matériau de remplissage (104).

10. - Procédé selon la revendication 9, **caractérisé en ce qu'**il comprend l'étape consistant, après la prise du matériau de remplissage (104), à retirer ledit ensemble de moulage (1) de la paroi (103) constituée par le matériau de remplissage (104).
